# EUROPEAN PATENT APPLICATION

(11) **EP 2 178 328 A2**
(43) Date of publication of application: **21.04.2010**
(21) Application number: 08021564.3
(22) Date of filing: 11.12.2008
(51) Int. Cl.: H04W 40/02

(54) **Method for transmission of data in a mesh network**

(30) Priority: 14.10.2008 EP 08017997
(71) Applicant: Siemens Aktiengesellschaft, 80333 München (DE)
(72) Inventor: D'Heureuse, Nico, 69123 Heidelberg (DE); Hollick, Matthias, 64289 Darmstadt (DE); Mogre, Parag Sudhir, 64289 Darmstadt (DE); Ziller, Andreas, 81827 München (DE)

(57) **Abstract**

The invention describes a method for transmission of data between source nodes (A, B, C, D, E) and destination nodes (A, B, C, D, E) in a mesh network, especially a wireless mesh network. According to at least one predetermined criterion of a data flow to be established between one of the source nodes (A, B, C, D, E) and one of the destination nodes (A, B, C, D, E), a route and/or schedule is determined by selection of one of a first and a second scheduling method. The first scheduling method is a distributed scheduling method carried out by the source node (A, B, C, D, E) and the destination node (A, B, C, D, E). The second scheduling method is a centralized scheduling method under the control of a node of the mesh network serving as a central server, wherein the route and/or the schedule for the flow transmission is determined by using a method considering and optimizing the bandwidth within the mesh network.

## Description

The invention relates to a method for transmission of data between source nodes and destination nodes in a mesh network, especially a wireless mesh network, wherein a route and/or a schedule between one of the source nodes and one of the destination nodes is determined. The invention further relates to a mesh network.

A wireless mesh network (WMN) is a multi-hop network which as compared to mobile ad-hoc networks (MANET) is rather static. As further difference, a wireless mesh network might even be operated by a service provider. Providers can offer additional base stations that provide extended services to the network to its users, such as internet access or location-based services. Some of the usage scenarios for mesh networks include campus network, disaster recovery or broadband wireless internet access in rural areas. Compared to conventional single hop networks, so-called point-to-multi-point networks, wireless multi-hop networks offer many new opportunities and advantages such as lower infrastructure cost, larger coverage area and potentially higher throughput. However, they also raise numerous new challenges. Wireless mesh networks have to cope with the trade-off between the minimization of the routing and scheduling overhead, respectively, with the performance of the network.

In order to minimize messaging overhead, distributed routing and scheduling mechanisms are used. Those mechanisms have to deal with the disadvantage that they operate on limited knowledge which they retrieve out of the direct one- or two-hop-neighbourhood. Routing or scheduling decisions for flows are often based on local information with the consequence that the resources are not optimal from a global perspective. A better utilization of resources allows a distributed mesh architecture as spatial reuse can be exploited. Data can flow on arbitrary paths through the network. Resources are reserved by distributed algorithms without the necessity of a central infrastructure. However, limited knowledge of the network often leads to suboptimal results.

As an alternative, centrally organized routing and scheduling could be used. In that case all information about the connectivity of the nodes, the routes and the timetables are maintained by a central infrastructure. Typically, mesh networks having a centrally organized infrastructure have a base station or central server which retrieves all requests from the nodes of the mesh networks, calculate schedules, optimal timetables and routing tables and distribute it to the nodes or subscriber in its realm stations. One problem of this mechanism is that the message and time overhead is immense as each single information entity has to be transported to a node serving as the central server. On the other hand, the traffic or a data flow in those architectures is always along a tree from the sending node to the receiving node even if the sending node and the receiving node are adjacent or a shorter path between both nodes exists. This means that all transmission of data is routed via the base station or central server. Therefore, those tree structures are actually not suited for mesh networks as the available resources are not optimally utilized because the whole network performance is limited only to the capacity of the channel around the central server. Furthermore, scaling problems are implied by that.

An example for a central and a distributed architecture can be taken out of the IEEE standard 802.16-2004.

In mesh networks the dilemma between minimization of message overhead and the optimization of the quality of routing and scheduling has to be solved.

It is therefore an object of the present invention to provide a method for the transmission of data in a mesh network and a mesh network wherein the above mentioned problems can be avoided.

According to the invention, a method for transmission of data between source nodes and destination nodes in a mesh network, especially a wireless mesh network, is provided wherein according to at least one predetermined criterion of a data flow to be established between one of the source nodes and one of the destination nodes, a route and/or schedule is determined by selection of one of a first and a second scheduling method. The first scheduling method is a distributed scheduling method carried out by the source node and the destination node. The second scheduling method is a centralized scheduling method under the control of a node of the mesh network serving as a central server, wherein the route and/or the schedule for the flow transmission is determined by using a method considering and optimizing the bandwidth within the mesh network.

The invention suggests a mechanism which applies a hybrid approach with a central infrastructure supported route optimization for mesh networks in order to increase the overall capacity in the network. With this hybrid approach it is possible to apply always the appropriate type of bandwidth management to a flow - whether it is set up centralized or distributed. At the same time quality of service is provided. With the method according to the invention the advantages of central knowledge with distributed reservation and management mechanisms can be combined. Therefore, a better utilization of resources is provided. On the other hand the method according to the invention is flexible to address the bursty nature of flows by allowing the establishment of those flows with distributed mechanisms. As a result, besides a better utilization of bandwidth a higher network performance in terms of throughput and delay is achieved.

According to a preferred embodiment the determination of the route and/or the schedule is carried out by the central server, the central server may be a hop in the determined route between the source node and the destination node. In case that a data flow is scheduled by the centralized scheduling method it is not necessary that the data flow is routed via the central server. The routing and scheduling is made to comply with an optimized bandwidth for utilizing the resources of the mesh network in an optimal manner.

According to a further embodiment a duration of the data flow is taken as a criterion whether the route and/or schedule of the data flow is determined by the first scheduling method or the second scheduling method. Furthermore, a setup delay in comparison to the duration of the data flow can be taken as a criterion whether the route and/or schedule of the data flow is determined by the first scheduling method or the second scheduling method. According to a further embodiment, constantly or changing demands of the data flow are taken as a criterion whether the route and/or schedule of the data flow is determined by the first scheduling method or the second scheduling method.

The idea is that data flows are differentiated between long-term and short-term flows. Long-term flows are long lived (at least a couple of seconds) and have relatively constant demands. Such flows can be caused by a download or an IP telephony session. They are managed and optimally scheduled by a central server which bases the routing and scheduling decision on its knowledge on the current allocation of bandwidth in the network. Short-term flows have a more bursty nature. The demands of such flows change quickly. Web traffic is an example for short-term flows. It is therefore reasonable to maintain them with distributed methods for routing, e.g. AODV, QSRM or DSR, and scheduling as the setup delay would have a too large percentage in the lifetime of a short flow. Hence, the duration of the flow setup is used as one criterion for the classification of a short or a long-term flow as well as the setup delay. If the setup delay is relatively large in comparison to the flow duration, it is a criterion for a long-term flow.

According to a further embodiment, the mesh network is based on TDMA (time division multiplex access), wherein a transmission channel for the data flow consists of frames, each of the frames having a control subframe for management messages and a data subframe for workload, wherein the data subframe is divided into a total amount of transmission slots. The division of the TDMA frame (short: frame) into a control subframe for management messages and a data subframe for workload is known from the standard IEEE 802.16 mesh networks. In the case of the TDMA based mesh network, the bandwidth of the channel can be subdivided in timeslots with a defined length. A slot is designated typically to a certain neighbour. It is also possible that in the timeslot data is transmitted to multiple neighbours (multicast) and to all neighbours (broadcast), respectively. For the scheduling it is important that a slot is assigned to exactly one sender within the two-hop neighbourhood. This is necessary in order to avoid that the receiver is able to receive the transmission without the interference of a third node.

According to a first variant of the invention the data subframe is divided in a first data subframe having a first amount of transmission slots for first flows determined with the first scheduling method and a second data subframe having a second amount of transmission slots for second flows determined with the second scheduling method. According to this embodiment, the bandwidth of the channel is divided in the time domain in two parts. One part is exclusively used for first flows being short-term flows which are scheduled and routed by distributed mechanisms. The other is exclusively used for second flows being long-term flows which are maintained by the central server.

According to a further embodiment, the sum of the first and the second amount of the transmission slots corresponds to the total amount of transmission slots and the number of the first amount of the transmission slots either is fixed over the mesh network or may be changed in dependence of the ratio between the first flows and the second flows in the network. Therefore, the first and the second amount of the transmission slots are a tuning parameter which can be either fixed over the whole network lifetime or be changed in dependence of the ratio between the short-term and the long-term flows in the network. The advantage of the splitting of the channel bandwidth is that not exclusive allocations of the channel (as collisions) can be avoided. This situation can occur when some slots are allocated distributedly and the central server determines a new schedule without that information.

The nodes of the mesh network determine their demands for the first and second flows and report them periodically and upon certain events to the central server. This may be done via explicit application requests or measurement of packet arrival rates. The determination of a demand and its report to the central server may be initiated when a new flow is established, a data flow is removed or a data flow demand changes.

The demand may be described by a quality of service (QoS) parameter set. The parameter set may comprise one or more parameters, like throughput, delay or maximum packet loss. The central server determines according to these reports an optimal or near optimal allocation of the resources of the network, so that the reported demands are fulfilled best.

In a further improvement the central server determines a schedule comprising the allocation of bandwidth for a particular node and when this parameter is allowed to transmit as well as a routing table for each node. The routing table describes the following rules for a particular node with respect to incoming packets.

Furthermore, new schedules and/or routing tables are distributed to all nodes in the realm of the central server, where they replace the existing out-dated schedules and routing tables. Transmissions start or continue according to these tables without the requirement of further actions.

In a second variant the total amount of transmission slots can be used by the central server for the first and the second flows. Therefore, the central server is able to operate on the whole capacity of the transmission channel. The central server takes for the determination of schedules and routing tables the allocation of bandwidth for the first flows and the second flows into account. New determined schedules and routes effect the operation of long-term as well as short-term flows. Just as well as in the first variant, existing schedules and routing tables are replaced by tables from the central server. Although this modifies also the scheduling and routing of existing short-term flows, it is nevertheless transparent for the distributed management of short-term flows. For the determination of the demands of the nodes of the mesh networks a cross-layer interface may be provided with which related information from application layer, MAC layer and routing layer can be retrieved.

If a second flow cannot be established due to high congestion, the central server can drop one or more flows according to at least one criterion (e.g. QoS class) and/or reroute some existing flows in order to address the changing demands and/or initiate a reduction of data rates of one or more existing flows. The rerouting mechanism is enforced by the algorithm for the determination of routes and schedules. In the case of rerouting or rescheduling the central server does not differentiate in long-term and short-term flows. It is also possible that the central server asks applications running on nodes or subscriber stations of the mesh network over the mentioned cross-layer interface to reduce data rates. For example, a video application could reduce data rates by reducing the quality of the video stream.

In a further preferred embodiment network coding is considered for the determination of routes and/or schedules. Network coding can be applied when opposite traffic flows cross intermediate nodes. If data flows cross each other the schedules can be determined in a way that one or multiple transmissions are saved by the transmission of several packets coded in one packet so that two or more nodes can retrieve their packet by decoding the packet with previously overheard packets. The exploitation of network coding is taken into account by the optimization algorithm.

For the distribution of schedules and routing tables by the central server, the central server calculates a full schedule containing exact slot assignments for the whole mesh network and distributes at least a part of the schedule to all nodes. Hence, for every transmission slot of a frame a complete assignment of which node is sending to which other node is calculated. This information will be distributed to the nodes such that this schedule is actually deployed in the network. The central server can thus guarantee that calculated schedule is really used in the network.

Since the overhead for control data should be kept as low as possible, it is not feasible to always distribute the full link activation schedule to all nodes. Instead, only a minimum set of information should be distributed. According to this, the central server sends to each node of the mesh network a unique message including a schedule, optionally a routing table, and two sets of slots specifying in which slots the node will transmit or receive. Each unique message according to the invention additionally contains a start frame number that specifies when the schedule should be activated. In this unique message only slot information is included, whereas no information about the target respectively source of the transmission is enclosed. This means that after receiving the unique message, the node will only know when (in what slots) it will be allowed to send or receive, but will not know where (that means what neighbour) the transmission should be directed to or will come from.

Upon reception of the message the receiving node rebroadcasts this message to its neighbour nodes. This is done by resending the data of the unique message within the control subframe using a modified DSCH (distributed scheduling) message.

Nodes overhearing or receiving this message can translate it into an equivalent set of grant and grant confirm messages and update their own slot states. Grant and grant confirm messages are standard elements for distributed bandwidth reservation specified in the IEEE standard 802.16-2004.

The broadcasting of scheduling information within a one-hop neighbourhood is necessary to avoid conflicts with reservations made using the DSCH mechanism. Since the central station has no knowledge about the availability status of the nodes, it is not guaranteed that the central schedule is conflict free with the current slot assignment of the nodes.

The invention further provides a mesh network, especially a wireless mesh network, with source nodes and destination nodes between which data are transmitted. The mesh network comprises a first means for determining at least one predetermined criterion of a data flow to be established between one of the source nodes and one of the destination nodes. It further comprises a second means for determining a route and/or a schedule by selecting one of a first and a second scheduling method, wherein the first scheduling method is a distributed scheduling method carried out by the source node and the destination node and the second scheduling method is a centralized scheduling method under the control of a node the mesh network serving as a central server, wherein the route and/or the schedule for the flow transmission is determined by using a method considering and optimizing the bandwidth within the mesh network.

Furthermore, the mesh network may comprise further means for carrying out the method as set out above.

The invention will be described in more detail by reference to the figures.
- Fig. 1: shows the structure of a TDMA frame according to a first variant of the invention at the example of the IEEE standard 802.16,
- Fig. 2: shows the structure of the TDMA frame according to the second variant of the invention at the example of the IEEE standard 802.16,
- Fig. 3: shows the problem of a schedule merge conflict in a mesh network organized according to the invention, and
- Fig. 4: shows the deployment of a central schedule using the method of the invention.

Before describing the figures in detail, the meaning of the terms used in this description is given:

A "routing mechanism" determines a sequence of nodes, which are able to forward the packets of a packet or data stream from a source node to a destination node of a mesh network. Such a sequence of nodes is referred as a route or a path. Further, the decision by an intermediate node on a route which incoming packets have to be forwarded to next node can be referred as routing as well. This decision is typically based on a routing table.

With "scheduling" a mechanism is meant to determine the exact moment in time when a packet is physically transmitted on the channel to one or to multiple next hops. Requirements for a scheduling mechanism could be that determination of transmission opportunities occurs in such a way that the channel is exclusively allocated to one sending node. In TDMA based network technologies which will be considered for this invention, the channel is divided into transmission slots, which can be reserved by a three way handshake in order to inform the participating nodes as well as the neighboring nodes about its allocation.

As a "flow" or "data flow" a succession of packets is meant which are transmitted from a source node to a destination node over several intermediate nodes (IMN). If a node maintains a flow in its flow table this node is an intermediate node on the path of that flow.

If a flow is supposed to be "coded" with one or more other flows a coded packet is created by a coding function (e.g. the bitwise xor-function) which takes one packet of each flow as an input and calculates a combined packet as an output. This coded packet is broadcasted and decoded by the intended receivers. The decision which flows are coded together and exactly which packets of those flows are coded together is done by the Network Coding Protocol.

According to the invention, a hybrid network architecture is suggested which combines distributed with centrally organized scheduling and addresses the dilemma in mesh networks between the minimization of message overhead and the optimization of the quality of routing scheduling. The basic idea is that each data flow to be established between a source node and a destination node in the mesh network, especially a wireless mesh network according to the TDMA standard, a route and/or a schedule is determined by selection of one of a first and a second scheduling method wherein the first scheduling method is a distributed scheduling method carried out by the source node and the destination node themselves. The second scheduling method is a centralized scheduling method under the control of a node of the mesh network serving as a central server, wherein the route and/or the schedule for the flow transmission is determined by using a method considering and optimizing a bandwidth within the mesh network. According to this, there is a differentiation between flows being scheduled by the first or the second scheduling method. Flows being determined with the first scheduling method are called first flows or short-term flows. Flows being determined with the second scheduling method are called second flows or long-term flows.

Where long-term flows are long-lived and have relatively constant demands, short-term flows have a more bursty nature where their demands change quickly. Long-term flows are managed and optimally scheduled by a central server which bases the routing and scheduling decision on its knowledge of the current allocation of bandwidth in the network.

The role of the central server can be taken by an arbitrary chosen node which assists the other nodes in the mesh network with routing and scheduling of packet flows, in order to establish end-to-end packet flows with defined criteria, especially quality of service (QoS) criteria. The central server itself is not an indispensable element of the network, as the nodes in the network are also able to forward packets from a source node to the destination node in case this element is out of service.

With respect to short-term flows, it is reasonable to maintain them with distributed methods for routing, e.g. AODV, QSRM or DSR. In principle, the duration of the flow setup can be a criterion for the classification of a short or a long-term flow. If the setup delay is relatively large in comparison to the flow duration, it is a criterion for a long-term flow.

The method according to the invention provides two different variants which are similar expect for the below described data subframe split in a centrally and a distributedly managed part. Those variants will be described by reference to a TDMA based mesh network wherein the bandwidth of the channel can be subdivided in timeslots with a defined length. A slot is designated typically to a certain neighbour. Nevertheless, it is also possible that in a particular timeslot data is transmitted to multiple neighbours (multicast) and to all neighbours (broadcast) respectively. For the scheduling it is important that a slot is assigned to exactly one sender within a two-hop neighbourhood. This is necessary in order to avoid that the receiver is able to receive the transmission without the interference of a third node.

### Variant 1

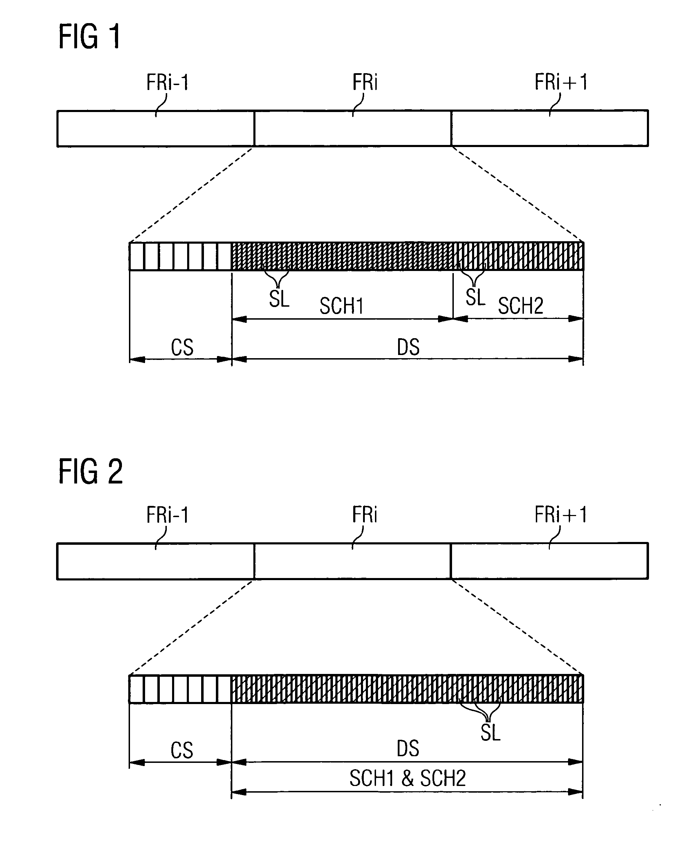

The structure of a TDMA frame according to the first variant of the invention at the example according to the IEEE standard 802.16 is shown in Fig. 1. Fig. 1 shows three frames FRi-1, FRi and FRi+1. The structure of each of the frames FRi-1, FRi and FRi+1 is identical. The detailed structure for the frame FRi is exemplary enlarged shown. The frame FRi comprises a control subframe CS for management messages and a data subframe DS for workload. The data subframe consists of a fixed number of slots SL. The bandwidth of the channel, namely the data subframe, is divided in the time domain in two parts SCH1 and SCH2, where the first part SCH1 is exclusively used for long-term flows. The second part SCH2 is exclusively used for short-term flows which are scheduled and routed by distributed mechanisms.

In the example the first n slots of the first part SCH1 of the data subframe DS are designated for long-term flows which are maintained by the central server. The size of n is a tuning parameter which can be either fixed over the whole network lifetime or be changed in dependence of the ratio between short-term and long-term flows in the network. The reason for the splitting of channel bandwidth is that not exclusive allocations of the channel (as collisions) shall be avoided. This can occur when some slots are allocated distributedly and the central server determines a new schedule without that information. Due to the limited speed of propagation of information, the knowledge of the allocations in the network by the central server cannot be up to date all the time.

The nodes in the network determine the demands for their long-term and short-term flows, e.g. via explicit application requests or via measurement of packet arrival rates and report these demands periodically and upon certain events to the central server. This may be necessary when a new flow is established, a flow is removed or flow demands change. The demand can be described by any QoS parameter set as throughput, delay or maximum packet loss. The central server determines according to these reports an optimal or near optimal allocation of the resources of the network so that the reported demands are fulfilled best.

Besides this, the central server determines a schedule and a routing table for each node. The schedule comprises the allocation of bandwidth for a particular node. It determines when the node is allowed to transmit. The routing table describes the forwarding routes for a particular node with respect to incoming packets. In the next step, these new schedules and routing tables are distributed to all nodes in the realm of the central server. There, they replace the existing out-dated schedules and routing tables. Transmissions start or continue according to these tables without the requirement of further actions.

### Variant 2

The structure of the TDMA frame according to the second variant of the invention again by reference to the IEEE standard 802.16 is shown in Fig. 2. In this second variant the central server is able to operate on the whole capacity of the channel, i.e. the data subframe DS of each frame FRi, FRi-1, FRi+1. The central server takes for the determination of schedules and routing tables the allocation of bandwidth for long-term as well as for short-term flows into account. New determined schedules and routes effect the operation of long-term as well as short-term flows. Just as well as in the first variant, existing schedules and routing tables are replaced by tables from the central server. Although this modifies also the scheduling and routing of existing short-term flows, it is nevertheless transparent for the distributed management of short-term flows.

Contrary to similar centralised scheduling mechanisms, the transmissions between source and destination node can take place between adjacent neighbours and do not have to go over the central server. In other words, the central server may be but is not necessarily a hop in the route between a source and the destination node even if the scheduling has been done by the central server.

For the determination of the demands of the nodes a cross-layer interface is necessary with which related information from application layer, MAC layer and routing layer can be retrieved.

If it is necessary that a requested long-term flow cannot be established due to high congestion the central server can drop certain flows after defined criteria. For example, the QoS class to which a flow is associated can be such a criterion. It is also possible that the central server reroutes some existing flows in order to address the changing demands of the nodes. The rerouting mechanism is enforced by the algorithm for the determination of routes and schedules. In the case of rerouting or rescheduling the central server does not differentiate between long-term and short-term flows. It is also foreseen that the central server asks applications running on the nodes over the cross-layer interface to reduce the data rates. For example, a video application could reduce data rates by reducing the quality of the video stream.

It is further possible that the central server considers network coding paradigms for the determination of routes and schedules. In general, network coding can be applied when opposite traffic flows cross on intermediate nodes. If data flows cross each other the schedules can be determined in a way that one or multiple transmissions are saved by the transmission of several packets coded in one packet so that two or more nodes can retrieve their packet by decoding the packet with previously overheard packets. The exploitation of network coding is taken into account by the optimization algorithm. For the utilization of network coding it is necessary that the nodes have to be informed when and which packet flows have to be encoded. Packets which are coded together belong to different flows each by each. The schedules and routing tables retrieved by the nodes from the central server comprise all the necessary information for the application of network coding. This includes the information in which timeslots which flows have to be encoded and which packets have to be overheard in order to decode a packet.

In the following distribution of schedules and routing tables by the central server is described.

To find the optimum set of routes, the central server calculates a full schedule as described above. This schedule contains the exact slot assignments for the whole network, i.e. for every slot a complete assignment of which node is sending to which is calculated. This information can also be distributed to the nodes such that this schedule is actually deployed in the network. The central server can thus guarantee that calculated schedule is really used in the network. Therefore, all parameters that lead to the selection of this schedule will be reached. Parameters might be the maximum number of concurrent transmissions, minimum number of blocked links, schedulability of all admitted flows.

To distinguish this approach from the centralized scheduling mechanisms specified in IEEE 802.16, the mechanism according to the invention will be called enhanced centralized scheduling (ECSCH).

Since the overhead for control data should be kept as low as possible, it is not feasible to always distribute the full link activation schedule to all nodes. Instead only a minimum set of information should be distributed. According to the invention the distributing of the central schedule and the routing table to all nodes is as follows:
1. The central server sends an ECSCH message including schedule and routing table to each node of the network. This message is unique for every node. It contains two sets of slots, specifying in which slots the target node will transmit or receive. These slot sets could e.g. be implemented using a bit mask, where each bit represents one slot. Alternatively, using slot intervals, similar to the ones used in the standard DSCH (distributed scheduling) messages, could be used. Each ECSCH message additionally contains a start frame number that specifies when the schedule should be activated. It is necessary to understand that only slot information is included whereas new information about the target respectively source of the transmission is enclosed. That means that after receiving an ECSCH message the node will only know when (in what slots) it will be allowed to send or receive but will not know where (what neighbour) the transmission should be directed to or will come from.
2. Upon reception of an ECSCH message, the node (hereinafter called A) will rebroadcast this message in its neighbourhood. This is done by resending the data of the ECSCH message within the control subframe, using a modified DSCH message. Nodes overhearing or receiving this message can translate it into an equivalent set of grant and grant confirm messages and therewith update their own slot states:
   - Neighbours of A are not allowed to send in any slot where A is receiving. This is equivalent to *overhearing a Grant* message from A.
   - No neighbour of A will be able to receive in any slot where A is transmitting. This is equivalent to *overhearing a Grant Confirm* message from A.
   - If a neighbour N is, according to an ECSCH message it received from the CS, transmitting in a slot where A is receiving, A is the receiver of the transmission from N in this slot. This is equivalent to *receiving a Grant* message from A.
   - If a neighbour N is, according to an ECSCH message it received from the CS, receiving in a slot where A is transmitting, A is the sender of the transmission to N in this slot. This is equivalent to re*ceiving a Grant Confirm* message from A.

This broadcasting of scheduling information within a one-hop neighbourhood is necessary to avoid conflicts with reservations made using the DSCH scheduling mechanism. Since the central server has no knowledge about the availability status of the nodes, it is not guaranteed that the central schedule is conflict-free with the current slot assignment of the nodes.

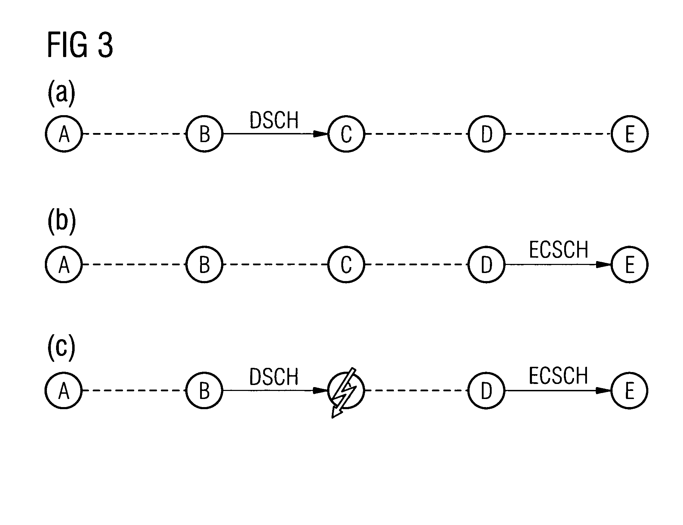

Fig. 3 illustrates the problems arising by a combined distributed and centralized scheduling. In Fig. 3 five nodes A, B, C, D, E of a mesh network are shown. As shown in the figure data can be exchanged between nodes A and B, B and C, C and D, D and E. Referring to Fig. 3a, assume that node B could reserve a certain slot for a transmission to node C using the known DSCH handshake. Furthermore, assume that the central server (not shown in Fig. 3) determined and distributed a schedule where node D transmits to node E in the regarded slot. This is illustrated in Fig. 3b. If those schedules would be simply merged, nodes B and D would transmit within the same slot causing a collision at node C as outlined in Fig. 3c. Since node D rebroadcasted the ECSCH message it received from the central server to nodes C and E (not shown in Fig. 3) node C will know that it will not be available for reception in this slot. Therefore, the transmission from node B must be cancelled.

As there are no messages specified to cancel a reservation from the receiver's side new types of messages are defined which are called "transmission cancel" (TC) and "reception cancel" (RC). Since these messages must reach all the neighbours in case they are broadcasted, they have to be sent within a DSCH message in the control subframe.

A transmission cancel message TC is sent if, due to a received ECSCH message, a transmission of the node must be cancelled. Similarly, a reception cancel message RC is sent, if a node is no longer able to receive in a certain slot interval, i.e. the transmitting neighbour will have to cancel its transmission.

As in the standards Cancel Grant and Cancel Grant Confirm messages, the transmission cancel and reception cancel messages contain a slot interval as well as the start frame for the cancellation. Instead of a 4 bit persistence field, the transmission cancel and reception cancel message contain an 8 bit frame range field. This is needed to exactly specify the frames for which the cancellation should be performed. A link ID field, as in the standard messages, is not needed since every node can determine on its own whether the message was directed to it or not, by checking its current transmission and reception tables.

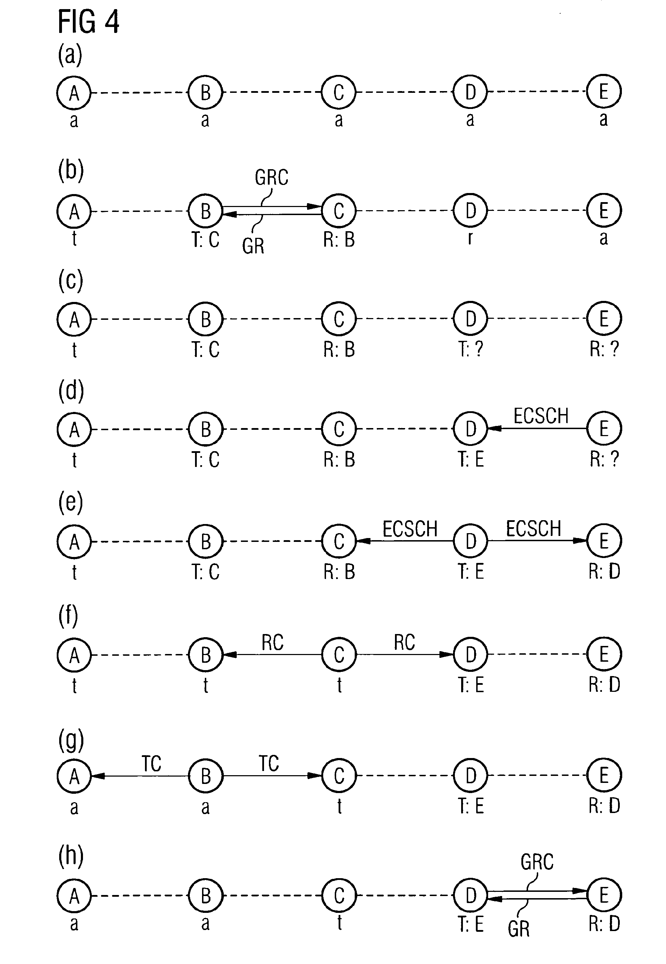

The complete message exchange process is depicted in Fig. 4. Fig. 4 visualizes the states of the nodes A, B, C, D, E after different messages have been sent or received. For simplicity it is assumed that only a single slot is available in the network. The following notation for the state of the nodes, which are printed below the corresponding nodes of Fig. 4, are used:

| | |
|---|---|
| a | The node is available for transmission or reception |
| t | The node is available for transmission only |
| r | The node is available for reception only |
| u | The node is not available for reception or transmission |
| T: N | The node reserved this slot for a transmission to N |
| R: N | The node is the receiver of a transmission from N |
| ? | The node is not known, yet |

The state of the network before the reception of an ECSCH message is shown in Fig. 4a and 4b. Again, it is assumed that node B could reserve the slot for a transmission to node C. As in the previous example (Fig. 3b) it is assumed that the central server determined a schedule where the slot should be used for a transmission from node D to node E. The central server sends this schedule to nodes D and E. After the reception of this message (Fig. 4c) the two nodes know that they will be a transmitter respectively the receiver of a transmission but they do not know who their communication partner is, yet. Therefore, nodes D and E broadcast the data from the central server within the control subframe. Fig. 4d shows that after receiving the ECSCH message from nodes E, node D can determine that its transmission must be directed to node E. Node E on the other hand can determine that it will receive from node D after node D send its ECSCH message (Fig. 4e).

By overhearing the ECSCH message from node D, node C can determine that a collision is about to happen and that it will no longer be able to receive the transmission from node B. Thus, node C sends a reception cancel message RC (Fig. 4f). Since this is again done with the control subframe, the message is received by nodes B and D. As node D did not schedule any transmission to node C, node D can simply ignore this message. Node B, however, will cancel its transmission to node C and will send a transmission cancel message TC as confirmation (Fig. 4g).

An additional effect of the transmission cancel message TC is that node A can determine that non of its neighbours is transmitted any more and will thus change its slot state from "available for transmission only" (t) to "available for transmission for reception" (a). For comparison, Fig. 4h shows the node states as if there had never been any transmission from node B to node C and the reservation from node D to node E would have been done using the standard DSCH mechanism. As it can be seen, by exchanging the ECSCH messages the nodes reach a state which is consistent with the DSCH states.

With the invention, another mechanism for the reservation and management of bandwidth in a wireless network which combines the advantages of central with distributed reservation and management mechanisms is proposed. With this hybrid approach it is possible to apply always the appropriate type of bandwidth management to a flow - whether it is centralized or distributed. The better utilization of resources through mechanisms which apply for central managed long-term flows compensates lots of time overhead for a reservation. On the other hand there is flexibility to address the bursty nature of short-term flows by allowing the establishment of those flows on a short-time horizon with distributed mechanisms. Additionally, the proposed mechanism applies network coding in order to further optimize the utilization of resources. As a result, a better utilization of bandwidth connected with higher network performance in terms of throughput and delay is provided in mesh networks.

## Claims

1. A method for transmission of data between source nodes (A, B, C, D, E) and destination nodes (A, B, C, D, E) in a mesh network, especially a wireless mesh network, wherein according to at least one predetermined criterion of a data flow to be established between one of the source nodes (A, B, C, D, E) and one of the destination nodes(A, B, C, D, E), a route and/or schedule is determined by selection of one of a first and a second scheduling method, wherein
- the first scheduling method is a distributed scheduling method carried out by the source node (A, B, C, D, E) and the destination node(A, B, C, D, E), and
- the second scheduling method is a centralized scheduling method under the control of a node of the mesh network serving as a central server, wherein the route and/or the schedule for the flow transmission is determined by using a method considering and optimizing the bandwidth within the mesh network.

2. The method according to claim 1, wherein the determination of the route and/or the schedule is carried out by the central server, the central server may be a hop in the determined route between the source node (A, B, C, D, E) and the destination node (A, B, C, D, E).

3. The method according to one of the preceding claims, wherein a duration of the data flow is taken as a criterion whether the route and/or schedule of the data flow is determined by the first scheduling method or the second scheduling method.

4. The method according to claim 3, wherein a setup delay in comparison to the duration of the data flow is taken as a criterion whether the route and/or schedule of the data flow is determined by the first scheduling method or the second scheduling method.

5. The method according to one of the preceding claims, wherein constantly or changing demands of the data flow are taken as a criterion whether the route and/or schedule of the data flow is determined by the first scheduling method or the second scheduling method.

6. The method according to one of the preceding claims, wherein the mesh network is based on TDMA, wherein a transmission channel for the data flow consists of frames (FRi-1, FRi, FRi+1), each of the frames (FRi-1, FRi, FRi+1) having a control subframe (CS) for management messages and a data subframe (DS) for workload, wherein the data subframe (DS) is divided into a total amount of transmission slots (SL).

7. The method according to claim 6, wherein the data subframe DS is divided in a first data subframe (SCH2) having a first amount of transmission slots (SL) for first flows determined with the first scheduling method and a second data subframe (SCH1) having a second amount of transmission slots (SL) for second flows determined with the second scheduling method.

8. The method according to claim 7, wherein the sum of the first and the second amount of the transmission slots (SL) corresponds to the total amount of transmission slots (SL) and the number of the first amount of the transmission slots (SL) either is fixed over the mesh network or may be changed in dependence of the ratio between the first flows and the second flows in the network.

9. The method according to claim 7 or 8, wherein the nodes of the mesh network determine their demands for the first and second flows and report them periodically and upon certain events to the central server.

10. The method according to claim 9, wherein the demand is described by a Quality of Service (QoS) parameter set.

11. The method according to one of the claims 7 to 10, wherein the central server determines a schedule comprising the allocation of bandwidth for a particular node (A, B, C, D, E) and when this particular node (A, B, C, D, E) is allowed to transmit as well as a routing table for each node.

12. The method according to claim 11, wherein new schedules and/or routing tables are distributed to all nodes in the realm of the central server.

13. The method according to one of the claims 1 to 6, wherein the total amount of the transmission slots (SL) can be used by the central server for the first and the second flows.

14. The method according to claim 13, wherein the central server takes for the determination of schedules and routing tables the allocation of bandwidth for the first flows and the second flows into account.

15. The method according to claims 13 and 14, wherein if a second flow cannot be established due to high congestion, the central server can
- drop one or more flows according to at least one criterion and/or
- reroute some existing flows in order to address the changing demands and/or
- initiate a reduction of data rates of one or more existing flows.

16. The method according to one of the preceding claims, wherein for the determination of routes and/or schedules network coding is considered.

17. The method according to one of the preceding claims, wherein the central server calculates a full schedule containing exact slot assignments for the whole mesh network and distributes at least a part of the schedule to all nodes (A, B, C, D, E).

18. The method according to claim 17, wherein the central server sends to each node (A, B, C, D, E) of the mesh network a unique message (ECSCH) including a schedule, optionally a routing table, and two sets of slots SL specifying in which slots the node will transmit or receive.

19. The method according to claim 18, wherein upon reception of the message the receiving node (A, B, C, D, E) rebroadcast this message to its neighbour nodes (A, B, C, D, E).

20. The method according to claim 19, wherein nodes overhearing or receiving the message within a control subframe translate the message (ECSCH) into an equivalent set of grant and grant confirm messages and update their own slot states.

21. A mesh network, especially wireless mesh network, with source nodes (A, B, C, D, E) and destination nodes (A, B, C, D, E) between which data are transmitted, comprising
- a first means for determining at least one predetermined criterion of a data flow to be established between one of the source nodes (A, B, C, D, E) and one of the destination nodes (A, B, C, D, E),
- a second means for determining a route and/or schedule by selection of one of a first and a second scheduling method, wherein
- the first scheduling method is a distributed scheduling method carried out by the source node (A, B, C, D, E) and the destination node (A, B, C, D, E), and
- the second scheduling method is a centralized scheduling method under the control of a node of the mesh network serving as a central server, wherein the route and/or the schedule for the flow transmission is determined by using a method considering and optimizing the bandwidth within the mesh network.

22. The mesh network according to claim 21, comprising further means for carrying out the method according to one of the claims 2 to 20.
